# EUROPÄISCHE PATENTANMELDUNG

(11) **EP 4 841 148 A1**
(43) Veröffentlichungstag der Anmeldung: **18.11.2026**
(21) Anmeldenummer: 26176227.2
(22) Anmeldetag: 04.05.2026
(51) Int. Cl.: F16L 55/18, F16L 55/44, F16L 55/165

(54) **PACKERSYSTEM UND VERFAHREN ZUR ROHR- UND KANALSANIERUNG UND AUSSENHÜLLE FÜR EIN PACKERSYSTEM**

(30) Priorität: 12.05.2025 DE 102025118055
(71) Anmelder: Pro-Kanal GmbH, 90763 Fürth (DE)
(72) Erfinder: Meier, Hans Dieter, Fürth (DE)
(74) Vertreter: Lindner Blaumeier Patent- und Rechtsanwälte

(57) **Zusammenfassung**

Packersystem (32) für die Rohr- und Kanalsanierung, umfassend einen Packer (1), der ein vorderes und ein hinteres Endstück (3, 4), zwischen denen eine mit einem Druckmittel befüllbare, dehnbare Hülle (2) und eine innerhalb der Hülle (2) zwischen dem vorderen und dem hinteren Endstück (3, 4) verlaufende Stabilisierungsanordnung (13) angeordnet sind, aufweist,
dadurch gekennzeichnet, dass die Hülle (2) aus einem gewebelosen, insbesondere weichen, Hüllenmaterial besteht und das Packersystem 32) ferner wenigstens einen Außenschlauch (33, 33a, 33b) aus einem flexiblen Gewebematerial, das eine gegenüber der Hülle (2) geringe oder eine verschwindende Dehnbarkeit aufweist, umfasst, wobei der Außenschlauch (33, 33a, 33b) einen inneren, die Länge zwischen den Endstücken (3, 4) zumindest im Wesentlichen überdeckenden Zentralabschnitt (39) mit einem ersten Innendurchmesser (40, 41) und zu beiden Seiten des Zentralabschnitts (39) jeweilige Endabschnitte (42, 43) eines zweiten Innendurchmessers (44, 45), der kleiner als der erste Innendurchmesser (40, 41) ist und zumindest im Wesentlichen dem Außendurchmesser der Endstücke (3, 4) entspricht, aufweist, so dass der Außenschlauch (33, 33a, 33b) derart über den Packer (1) überziehbar ist, dass die Endabschnitte (42, 43) an den Endstücken (3, 4) anliegen und der Zentralabschnitt (39) die Ausdehnung der Hülle (2) bei Druckbeaufschlagung, insbesondere auf den ersten Innendurchmesser (40, 41), begrenzt.

## Beschreibung

Die Erfindung betrifft ein Packersystem für die Rohr- und Kanalsanierung, umfassend einen Packer, der ein vorderes und ein hinteres Endstück, zwischen denen eine mit einem Druckmittel befüllbare, dehnbare Hülle und eine innerhalb der Hülle zwischen dem vorderen und dem hinteren Endstück, insbesondere zentral, verlaufende Stabilisierungsanordnung angeordnet sind, aufweist. Daneben betrifft die Erfindung eine Außenhülle für ein Packersystem und ein Verfahren zur Rohr- und Kanalsanierung mit einem Packersystem.

Packer für die Sanierung von Rohrleitungen und Kanälen (häufig auch als "Sanierungspacker" bezeichnet) sind im Stand der Technik bereits bekannt und bestehen zumeist aus einer dehnbaren Hülle, die an beiden Enden verschlossen ist. An einer hinteren Seite ist dabei meist ein Anschluss für Luft oder Wasser als Druckmittel vorgesehen, wobei zur Bewegung, beispielsweise an beiden Seiten, Zugösen verwendet werden können. Der Packer wird mit einem Laminat/Liner umwickelt und in die zu sanierende Leitung eingebracht. Das Laminat besteht üblicherweise aus einem Glasfasergewebe oder einer Glasfasermatte, das bzw. die mit einem Kunstharz getränkt worden ist. Nachdem der Packer mit dem Laminat an die zu sanierende Stelle in dem Kanal oder der Rohrleitung eingebracht worden ist, wird er mit dem Druckmittel befüllt, wobei er sich ausdehnt und das Laminat an die schadhafte Stelle der Rohrwandung presst. Nach dem Aushärten wird das Druckmittel abgelassen und der Packer, beispielsweise mittels der Zugöse, wieder herausgezogen. Zur Positionierung wird dabei häufig ein zweiseitiger Zugang ausgenutzt.

Um in Kanälen und Rohren Schäden festzustellen, ist es bekannt, Kameras in das entsprechende Rohr bzw. den entsprechenden Kanal einzubringen, um insbesondere auch die Position des Schadens feststellen zu können. Dabei werden die Schadensart und die exakte Schadensposition dokumentiert. Somit können zur genauen Positionierung des Sanierungspackers die Maße zum Erreichen der Schadensposition auf die entsprechende Positionierungsanordnung, beispielsweise umfassend Zugseile und/oder eine Schiebeeinrichtung, durch Markierung übertragen werden. Erst danach wird der Packer mit Laminat bestückt und zur Schadstelle gezogen oder geschoben. Auch dieser Vorgang wird üblicherweise mit einer Kamera überwacht. Nach dem Aushärten des Laminats wird die Kamera erneut eingesetzt, um das Ergebnis zu dokumentieren. Die Vor- und Nacharbeiten können einen großen Anteil, beispielsweise bis zu 50%, der Arbeitszeit bei einer Sanierung in Anspruch nehmen.

Daher wurde im Stand der Technik bereits vorgeschlagen, Kameras an dem Sanierungspacker selbst vorzusehen. Diese können beispielsweise außen an dem vorderen Endstück (häufig auch als Flansch bezeichnet) den Packer verlängern. Aus DE 10 2022 104 411 A1 ist ein Sanierungspacker bekannt, bei dem der hintere und der vordere Flansch durch ein hohles Durchführelement innerhalb der Hülle, gegen diese abgedichtet, verbundene Durchführungsöffnungen aufweisen, durch die eine Zuleitung zu einer an die Durchführungsöffnung des vorderen Flansches anschließend angeordneten Kameraanordnung mit einer Kamera geführt ist. Dort wird mithin vorgeschlagen, eine dem vorderen Flansch vorlaufende Kamera an dem Packer anzubringen, die es ermöglicht, den Bewegungsweg des Packers zu überwachen und insbesondere auch die korrekte Stelle, die saniert werden soll, aufzufinden und den Packer verbessert zu positionieren. Das Durchführelement kann auch stabilisierend wirken. Insbesondere kann die Steifigkeit des hohlen Durchführelements so gewählt sein, dass der Abstand der beiden Endstücke bei Bewegung und/oder Befüllung mit dem Druckmittel zumindest im Wesentlichen konstant bleibt. Bei derart stabilisierend wirkenden Durchführelementen kann zudem das Problem auftreten, dass, insbesondere bei stärkeren Kurven wie 90°-Kurven, der Packer trotz einer gewissen Biegeflexibilität nicht um Kurven führbar ist.

Um auch Rohr- oder Kanalleitungen sanieren zu können, die Bögen aufweisen, wurden auch Packer vorgeschlagen, die über spezielle Einrichtungen in ihrer Form einstellbar sind. Beispielsweise wurde in DE 10 2008 021 956 A1 vorgeschlagen, den gesamten Packer mittels einer inneren Seele zu verformen. Diese Packer sind allerdings schwerer handzuhaben und die Abstimmung der Biegung des Packers zur tatsächlichen Rohrgeometrie ist herausfordernd.

Daher wurde in der nachveröffentlichten deutschen Patentanmeldung DE 10 2024 115 562.0 vorgeschlagen, dass eine, insbesondere zentral in dem Packer verlaufende, Stabilisierungsanordnung aufweist:
- einen eine erste Flexibilität aufweisenden und den größeren Teil der Gesamtlänge zwischen den Flanschen (Endstücken) abdeckenden Stabilisierungsabschnitt, der sich unmittelbar an das hintere Endstück anschließt, und
- einen Lenkabschnitt, der sich von dem Stabilisierungsabschnitt zu dem vorderen Endstück erstreckt, wobei der Lenkabschnitt eine zweite, höhere Flexibilität als der Stabilisierungsabschnitt aufweist.

Sowohl der Lenkabschnitt als auch der Stabilisierungsabschnitt sind hinreichend flexibel, dass der Packer insgesamt durch Kurven des Rohres oder Kanals, insbesondere Kurven wenigstens bis zu 90°, insbesondere auch bis zu 180°, geschoben werden kann. Der vorderseitig angeordnete Lenkabschnitt wirkt dabei als Navigationselement, welches sich durch seine höhere Flexibilität bzw. Biegeweichheit leichter an Biegungen im Verlauf des Rohrs oder Kanals anpassen kann und somit für den restlichen Packerkörper die weitere Richtung vorgibt. Insbesondere wird durch Abstützung im Biegungsbereich und schrittweise auch in den Stabilitätsabschnitt weiterzugebende Biegung eine hinreichende Querkraftwirkung auch in dem Stabilitätsabschnitt erreicht, so dass auch dieser trotz seiner höhere Biegehärte (geringeren Biegeflexibilität) biegt und der Packer insgesamt dem Rohr- bzw. Kanalverlauf folgt. Gleichzeitig aber wird durch den Stabilisierungsabschnitt weiterhin eine hinreichende Gesamtstabilität des Packers, beispielsweise beim Einführen, bereitgestellt. Hierzu ist der Stabilisierungsabschnitt länger als der Lenkabschnitt.

Eine generelle Problematik bei solchen Sanierungspackern ist, dass die Hülle, um die jeweils gewollte Dehnung ohne zu starke Formabweichungen zu erreichen, aus dickem Hüllenmaterial, welches dehnungsbegrenzend wirkt und dennoch den aufgrund den hohen Drücken zum Erreichen der Dehnungsbegrenzung auftretenden Kräften standhält, besteht. Daher erhält der Packer ein großes Gewicht und eine große Steifigkeit, was die Handhabbarkeit erschweren kann, und es wird eine große Menge an Hüllenmaterial, üblicherweise Gummi oder sonstiges luftdichtes Material, benötigt. Es wird hoher Druck benötigt. Zudem ist es bekannt, die Hülle zumindest bereichsweise noch durch Fasern oder Gewebe zu verstärken, was eine aufwendige Produktion zur Folge hat. Aufgrund der Dehnungsbegrenzung der Hülle sind Packer üblicherweise nur für bestimmte Dimensionen, mithin Durchmesser (wobei meist auf den Nenndurchmesser DN Bezug genommen wird), der zu sanierenden Rohr- und Kanalabschnitte geeignet. Um beispielsweise Durchmesserbereiche der zu sanierenden Rohr- und Kanalabschnitte von DN 70 bis DN 200 abzudecken, sind zwei oder sogar drei verschiedene Packer notwendig.

Auch für die Sanierung von engen Rohr- und Kanalbögen sind üblicherweise, meist aufgrund der hohen Steifigkeit des dicken Hüllenmaterials bei sonstigen Packern, spezielle Packer (sogenannten Bogenpacker, wie oben bereits beschrieben) notwendig.

Der Erfindung liegt daher die Aufgabe zu Grunde, eine Möglichkeit zur vielseitigen Anwendung eines Packers für unterschiedliche Sanierungsaufgaben und/oder zur Verbesserung der Handhabbarkeit des Packers bzw. einer diesen umfassenden Packeranordnung anzugeben.

Zur Lösung dieser Aufgabe sind erfindungsgemäß ein Packersystem mit den Merkmalen des Anspruchs 1, ein Außenschlauch mit den Merkmalen des Anspruchs 12 und ein Verfahren zur Rohr- und Kanalsanierung mit den Merkmalen des Anspruchs 13 vorgesehen. Vorteilhafte Weiterbildungen ergeben sich aus den Unteransprüchen.

Bei einem Packersystem der eingangs genannten Art ist erfindungsgemäß vorgesehen, dass die Hülle aus einem gewebelosen, insbesondere weichen, Hüllenmaterial besteht und das Packersystem ferner wenigstens einen Außenschlauch aus einem flexiblen Gewebematerial, das eine gegenüber der Hülle geringe oder eine verschwindende Dehnbarkeit aufweist, umfasst, wobei der Außenschlauch einen inneren, die Länge zwischen den Endstücken zumindest im Wesentlichen überdeckenden Zentralabschnitt mit einem ersten Innendurchmesser und zu beiden Seiten des Zentralabschnitts jeweilige Endabschnitte eines zweiten Innendurchmessers, der kleiner als der erste Innendurchmesser ist und zumindest im Wesentlichen dem Außendurchmesser der Endstücke entspricht, aufweist, so dass der Außenschlauch derart über den Packer überziehbar ist, dass die Endabschnitte an den Endstücken anliegen und der Zentralabschnitt die Ausdehnung der Hülle bei Druckbeaufschlagung, insbesondere auf den ersten Innendurchmesser, begrenzt.

Die Hülle ist wie grundsätzlich bekannt druckmitteldicht, insbesondere luftdicht, ausgestaltet, so dass gemeinsam mit den, insbesondere zumindest im Wesentlichen zylindrischen, Endstücken (Flanschen) ein mit dem Druckmittel befüllbarer Raum entsteht. Hierbei sorgt die Stabilisierungsanordnung und/oder eine sonstige Längsbegrenzungseinrichtung mit besonderem Vorteil dafür, dass der Abstand der beiden Endstücke bei Bewegung und/oder Befüllung mit dem Druckmittel zumindest im Wesentlichen konstant bleibt, weist aber insbesondere eine hinreichende Biegbarkeit auf, dass der Packer kurvengängig ist, worauf im Folgenden noch näher eingegangen werden wird. Es wird nun vorgeschlagen, die Hülle dünn und äußerst stark dehnbar - insbesondere zumindest im Wesentlichen ohne eine Dehnungsbegrenzung - auszugestalten, um diese bei Bedarf durch einen Außenschlauch als zusätzliche Außenhülle bereitstellen zu können.

Die Hülle weist also eine große Dehnbarkeit auf, insbesondere derart, dass ein Anwendungs-Durchmesserbereich der zu sanierenden Rohr- und/oder Kanalabschnitte durch die Hülle ausfüllbar ist, der größer ist als übliche Anwendungs-Durchmesserbereiche für Sanierungspacker, die eine Dehnungsbegrenzung in der Hülle aufweisen. Beispielsweise kann vorgesehen sein, dass die Hülle wenigstens auf das neunfache bis fünfundzwanzigfache, insbesondere wenigstens auf das sechzehnfache bis fünfundzwanzigfache, des zwischen den Endstücken eingeschlossenen Volumens und/oder das drei- bis fünffache des Durchmessers der Endstücke zerstörungsfrei dehnbar ist und/oder zylindrische, zu sanierende Rohr- und/oder Kanalabschnitte eines Anwendungs-Durchmesserbereichs von 70 bis 250 mm, insbesondere 70 bis 200 mm, auszufüllen vermag. Hierbei kann insbesondere Bezug auf die Nenndurchmesser (DN) genommen werden. Der Durchmesser des Packers und somit der Endstücke kann beispielsweise 40 bis 60 mm betragen. Die Dehnbarkeit der Hülle kann hierbei durch die Weichheit des Hüllenmaterials, also aufgrund des geringen Widerstands, der der dehnenden Formänderung entgegengebracht wird, auch mit niedrigen Drückenerhöhungen, beispielsweise weniger als 1 bar oder sogar von maximal 0,5 bar, erreicht werden. Mit besonderem Vorteil kann also vorgesehen sein, dass das Packersystem ferner eine Druckbeaufschlagungseinrichtung zum Befüllen der Hülle mit dem Druckmittel aufweist, die zur Beschränkung einer Druckerhöhung in der Hülle auf einen Maximalwert von höchstens 1 bar, insbesondere höchstens 0,5 bar, ausgebildet ist. Es sind also Drucke von maximal 0,5 bar ATÜ bis 1 bar ATÜ ausreichend, da das Hüllenmaterial ohne die Dehnungsbegrenzung herkömmlicher Packer dem Ausdehnen weniger Widerstand entgegensetzt. Mit anderen Worten kann gesagt werden, dass vorteilhafterweise bei Niederdruck gearbeitet werden kann. Dies bringt besondere Vorteile beim Sanieren von Asbestrohren mit sich. Denn diese drohen bei hohen Drücken zu bersten, was durch den erfindungsgemäß niedrigen Druck vermieden wird.

Insbesondere handelt es sich bei dem Hüllenmaterial um ein Elastomer oder ein vergleichbare Härteeigenschaften aufweisendes Material. Auf diese Weise können die gewünschten Eigenschaften bezüglich Weichheit und Dehnbarkeit bereitgestellt werden.

Insbesondere bei größeren Durchmessern der zu sanierenden Rohr- und Kanalabschnitte würde nun durch die deutlich erhöhte Dehnbarkeit des Hüllenmaterials das Risiko bestehen, dass durch Ausweichen des Hüllenmaterials in der Längsrichtung des zu sanierenden Rohr- und/oder Kanalabschnitts zum einen das Laminat bzw. der Liner nicht mehr hinreichend angepresst wird, zum andere die Hülle dem Risiko einer Beschädigung ausgesetzt wird. Um dies zu vermeiden, wird die Verwendung eines Außenschlauchs vorgeschlagen, der bei Bedarf zusätzlich an dem Sanierungspacker angeordnet werden kann, um eine Dehnungsbegrenzung bereitzustellen und die Ausdehnung zu lenken.

Der Außenschlauch ist hierzu, im Gegensatz zu der Hülle, kaum oder vorzugsweise zumindest im Wesentlichen nicht dehnbar, weist also ein zumindest im Wesentlichen festes maximales Innenvolumen auf und wirkt somit begrenzend auf die Dehnung der Hülle, wenn er um diese herum angeordnet ist. Auf diese Weise wird der Sanierungspacker mithin auf bestimmte Durchmesser bzw. Durchmesserbereiche des zu sanierenden Rohr- und/oder Kanalabschnitts konfektioniert, wobei insbesondere bei größeren Durchmessern des Anwendungs-Durchmesserbereichs vermieden wird, dass die Hülle sozusagen in Längsrichtung "ausweicht". So sorgt der Außenschlauch für eine gewünschte Formgebung und einen gewünschten Anpressdruck der sich ausdehnenden Hülle, insbesondere auch durch den Übergangsbereich vom ersten Innendurchmesser zum zweiten Innendurchmesser. Zudem wird die Hülle geschützt.

Versuche haben gezeigt, dass bei niedrigeren Durchmessern des Anwendungs-Durchmesserbereichs, beispielsweise bei Durchmessern des zu sanierenden Rohr- und/oder Kanalabschnitts, die nicht mehr als 30% bis 50 % größer als der Durchmesser des Packers, insbesondere der Endstücke, auch gänzlich ohne Außenschlauch gearbeitet werden kann. Weist beispielsweise der zu sanierende Rohr- und/oder Kanalabschnitt einen Nenndurchmesser (DN) von 70 mm bei einem Packerdurchmesser von 50 bis 60 mm auf, ist der entstehende Spalt zwischen Endstücken und Rohrwandung zu gering, um ein zu starkes Hinausdehnen der Hülle zu erlauben. Der Packer kann folglich alleine angewendet werden. Dies gilt vorteilhafterweise auch für die meisten Bögen, da hier die Ausdehnung aufgrund der Verhältnisse im längeren Außenbereich des Bogens eine ungewollte Dehnung über die Endstücke weitgehend verhindert. Das bedeutet, für zu sanierende Rohr- und/oder Kanalabschnitte geringeren Durchmessers, insbesondere einen untersten Anteil des Anwendungs-Durchmesserbereichs, sowie für die Sanierung von bogenförmigen Rohr- und/oder Kanalabschnitten zumindest unterhalb eines gewissen Schwellwerts für den Durchmesser lässt sich der Packer auch ohne Außenschlauch einsetzen, er ist mithin problemlos als "Bogenpacker" verwendbar, solange die Stabilisierungsanordnung eine hinreichende Flexibilität aufweist. Bei dem oben genannten Beispiel eines 50 bis 60 mm durchmessenden Packers kann beispielsweise in Rohrbögen mit bis zu DN 150 ohne Außenschlauch saniert werden.

Gleichzeitig lässt sich der Packer aber problemlos durch Hinzufügen eines Außenschlauchs in eine ohne Einschränkung für entsprechende Durchmesser des zu sanierenden Rohr- und/oder Kanalabschnitts verwendbare Packeranordnung umwandeln, indem einfach der Außenschlauch auf den Sanierungspacker derart aufgezogen wird, dass die Endabschnitte an den Endstücken anliegen. Denn dann wird durch die dehnungsbegrenzende Wirkung des Außenschlauchs ein Auftreten ungewollter Dehnungseffekte der Hülle robust und verlässlich vermieden, wobei sich dennoch das Laminat bzw. der Liner auf die gewollte Art anpressen lässt. Je nach der Begrenzungswirkung, also dem ersten Innendurchmesser, kann der Außenschlauch einem (insbesondere etwas kleinerem) Durchmesser des zu sanierenden Rohr- und/oder Kanalabschnitts bzw. einem (insbesondere knapp unterhalb des ersten Innendurchmessers liegenden) Durchmesserbereich zugeordnet sein. Liegen die zugeordneten Durchmesser oder Durchmesserbereiche des zu sanierenden Rohr- und/oder Kanalabschnitts etwas unterhalb des ersten Innendurchmessers, kann die Hülle problemlos das Laminat bzw. den Liner an die entsprechende Wand anpressen, da ggf. vorhandene kleine Falten in dem dünnen Gewebematerial nicht störend sind.

In besonders vorteilhafter Weiterbildung kann in diesem Zusammenhang vorgesehen sein, dass das Packersystem mehrere Außenschläuche unterschiedlicher erster Innendurchmesser aufweist, die unterschiedlichen Durchmessern und/oder Durchmesserbereichen zu sanierender Rohr- und/oder Kanalabschnitte zugeordnet sind. Ist beispielsweise für das Packersystem ein Anwendungs-Durchmesserbereich von 70 bis 200 mm (DN 70 bis DN 200) vorgesehen, kann für DN 70 der Packer ohne Außenschlauch angewendet werden, für DN 100 bis 150 ein erster Außenschlauch und für DN 150 bis 200 ein zweiter Außenschlauch vorgesehen werden. Auch denkbar sind Außenschläuche für alle Rohr- bzw. Kanalklassen außer DN 70, beispielsweise für DN 100, 125, 150, 175 (selten verwendet) und DN 200. Es liegt also nur ein einziger Packer für alle diese Rohrklassen bzw. Rohrdurchmesser vor, der über die aufziehbaren Außenschläuche einfach auf größere Durchmesser des zu sanierenden Rohr- und/oder Kanalabschnitts angepasst werden kann.

Das Gewebematerial des Außenschlauchs ist flexibel, um beispielsweise zunächst an dem Packer bzw. der nicht gedehnten Hülle anzuliegen, so dass die Packeranordnung aus Packer und Außenschlauch problemlos in einem Leitungssystem bewegt und platziert werden kann. Angaben wie der erste und der zweite Innendurchmesser beziehen sich dabei auf die das eingeschlossene Volumen maximierende Bezugsform des Außenschlauchs, die beispielsweise erreicht wird, wenn die Hülle innerhalb des Außenschlauchs derart ausgedehnt wird, dass die durch die Dehnungsbegrenzung maximal erlaubte Ausdehnung gegeben ist. Die Bezugsform weist die zwei dann zylindrischen Endabschnitte des zweiten Innendurchmessers und dazwischen den dann zylindrischen Zentralabschnitt auf, wobei die insbesondere kegelstumpfartigen Übergangsbereiche bevorzugt kurz gehalten werden, beispielsweise weniger als 5 % der Länge des Zentralabschnitts einnehmen, um den Nutzbereich für die Anbringung des Laminats oder Liners zu maximieren. Die zweiten Innendurchmesser sind auf die Außendurchmesser, insbesondere den (ggf. jeweils) maximalen Außendurchmesser, der Endstücke angepasst, so dass zum einen der Außenschlauch über den Packer gezogen werden kann, zum anderen aber die Endabschnitte möglichst eng an den Endstücken anliegen.

Allgemein gesprochen wird vorgeschlagen, die bisherige gemeinsame Funktion der Hülle - Ausdehnbarkeit und Dehnungsbegrenzung - auf zwei Komponenten aufzuteilen, was eine Vielzahl von, teils überraschenden, Vorteilen mit sich bringt. Die Hülle kann deutlich dünner, leichter und weniger steif ausgeführt werden. Auch der Außenschlauch kann durch eine einfache, dünne, äußerst leichte und flexible, jedoch kaum bzw. zumindest im Wesentlichen nicht dehnbare Gewebeschicht gebildet sein, so dass der Packer und auch eine mit dem Außenschlauch gebildete Packeranordnung deutlich leichter und besser handhabbar sind. Das Packersystem kann flexibel an verschiedene Durchmesser des zu sanierenden Rohr- und/oder Kanalabschnitts angepasst werden, bereits bei nur einem Außenschlauch, bevorzugt bei mehreren Außenschläuchen. Es ergibt sich also ein einziger Sanierungspacker für einen großen Anwendungs-Durchmesserbereich. Der Packer bzw. die Packeranordnung kann mit niedrigen Drücken betrieben werden, so dass ein Niederdruck-System gebildet ist. Da hauptsächlich die Außenschläuche der Umgebung und somit beispielsweise Schmutz und Abnutzung ausgesetzt sind, diese aber beliebig bei beibehaltenem Packer austauschbar sind, wird die Lebensdauer erhöht und die Kosten senken sich. Der austauschbare bzw. ersetzbare Außenschlauch dient also auch als Schutz für den Packer.

Konkret kann beispielsweise vorgesehen sein, dass die Hülle eine Materialdicke in einem Bereich von 0,1 bis 1 mm, insbesondere 0,3 bis 0,6 mm, aufweist. Es ist also gegenüber gängigen Materialdicken von mehr als einem Millimeter, insbesondere mehr als 3 oder sogar mehr als 5 mm, eine deutliche Reduzierung der Materialmenge und somit des Gewichts und der Steifigkeit gegeben. Das Hüllenmaterial kann bevorzugt ein Polyurethan-Elastomer (PU-Elastomer) und/oder Silikon sein. Diese Materialien sind als besonders weich und dehnbar bekannt. Das Hüllenmaterial kann bevorzugt transparent sein.

Es kann vorgesehen sein, dass der Packer ferner in an die Endstücke anschließenden Randbereichen, einen Zentralbereich des Packers freilassend, die Hülle lokal verstärkende, zylinderförmige Verstärkungselemente aus dem Hüllenmaterial aufweist. In den besonders belasteten Randbereichen kann also lokal eine leichte Verstärkung, insbesondere in gleicher Dicke wie die Hülle, vorgesehen sein. Bei Einsatz ohne Außenschlauch können diese auch formgebend bzw. den Anpressdruck leitend wirken. Bevorzugt sind die Verstärkungselemente innerhalb der Hülle angeordnet und/oder mit der Hülle verbunden. Beispielsweise kann die Hülle, auch allgemein, mehrschichtig gebildet sein, beispielsweise aus zwei dünnen Schichten des Hüllenmaterials. Dann kann das Verstärkungselement zwischen zwei Schichten der Hülle angeordnet, die Dicke der Hülle in den Randbereichen erhöhend. Auch ist es denkbar, dass an einer Schicht der Hülle die Verstärkungselemente einseitig befestigt sind, so dass das Hüllenmaterial in den Randbereichen eine erhöhte, insbesondere doppelte, Dicke aufweist.

Hinsichtlich der Außenhülle kann konkret vorgesehen sein, dass das Gewebematerial ein Kunstfasergewebe, insbesondere ein Nylongewebe, und/oder ein faserverstärktes Gewebe ist und/oder eine Dicke in einem Bereich von 0,05 bis 0,5 mm, bevorzugt 0,05 bis 0,2 mm, aufweist. Auch der Außenschlauch kann mithin äußerst dünn und leicht sowie flexibel ausgestaltet sind, was seine Handhabbarkeit genauso wie die der gesamten Packeranordnung vereinfacht sowie die Steifheit gering belässt. Beispielsweise können als Gewebematerial solche Materialien eingesetzt werden, die bereits aus Hochdruckanwendungen als robust und nur minimal bzw. nicht dehnbar bekannt sind, beispielsweise aus Airbag-Anwendungen.

Während es grundsätzlich denkbar ist, den Außenschlauch über Befestigungsmittel, beispielsweise über Gurte und/oder Schellen und/oder Klammern, an den Endstücken zu befestigen, hat die Praxis gezeigt, dass bei hinreichend auf den Außendurchmesser der Endstücke angepasstem zweiten Innendurchmesser ein guter Halt auch ohne solche Befestigungsmittel gegeben ist.

Um weiterhin für einen leichten und gut handhabbaren Packer zu sorgen, kann zudem vorgesehen sein, dass die Endstücke aus einem leichten Werkstoff, insbesondere aus Aluminium, bestehen.

Wie bereits erwähnt, weist die Stabilisierungsanordnung mit besonderem Vorteil eine hinreichend hohe Flexibilität auf, so dass der Packer bzw. die Packeranordnung nicht nur durch Bögen in den Leitungen geführt werden kann, sondern auch als Bogenpacker, also zur Sanierung in Bögen der zu sanierenden Rohr- und/oder Kanalabschnitte eingesetzt werden kann. Hierbei sind zur Navigation des Packers vorlaufende Navigationselemente, beispielsweise über Federelemente an dem vorderen Endstück angebrachte Kugeln, denkbar.

Mit besonderem Vorteil jedoch kann vorgesehen sein, dass die Stabilisierungsanordnung aufweist:
- einen eine erste Flexibilität aufweisenden und den größeren Teil der Gesamtlänge zwischen den Endstücken abdeckenden Stabilisierungsabschnitt, der sich unmittelbar an das hintere Endstück anschließt, und
- einen Lenkabschnitt, der sich von dem Stabilisierungsabschnitt zu dem vorderen Endstück erstreckt, wobei der Lenkabschnitt eine zweite, höhere Flexibilität als der Stabilisierungsabschnitt aufweist.

Dabei bezieht sich die (Biege-)Flexibilität auf Biegungen aus der Längsrichtung des Packers, die im gestreckten Zustand des Packers von Endstück zu Endstück definiert ist. Insofern beziehen sich die erste und die zweite Flexibilität auf Kraftkomponenten senkrecht zur Längsrichtung, mithin Querkräfte. Anders ausgedrückt ist der Lenkabschnitt biegsamer bzw. biegeweicher als der Stabilitätsabschnitt bzw. der Stabilitätsabschnitt biegehärter als der Lenkabschnitt. Konkret kann die höhere Flexibilität des Lenkabschnitts beispielsweise so verstanden werden, dass die Biegesteifigkeit des Stabilitätsabschnitts höher als die Biegesteifigkeit des Lenkabschnitts und/oder der E-Modul des Lenkabschnitts größer als der E-Modul des Stabilitätsabschnitts ist.

Während in einem Querkraftbereich, insbesondere umfassend üblicherweise innerhalb von Rohren und Kanälen bei Biegungen auftretende Querkräfte, die erste Flexibilität nicht ausreichen würde, um eine Verformung des Packers, konkret eine Verbiegung, zu erreichen, gilt dies nicht für die erste Flexibilität, wo die Verbiegung resultiert. Konkret kann die Flexibilität des Lenkabschnitts beispielsweise 120 bis 200 %, bevorzugt 130 bis 180%, der Flexibilität des Stabilitätsabschnitts betragen.

Sowohl der Lenkabschnitt als auch der Stabilisierungsabschnitt sind jedoch hinreichend flexibel, dass der Packer bzw. die Packeranordnung insgesamt durch Kurven des Rohres oder Kanals, insbesondere Kurven wenigstens bis zu 90°, insbesondere auch bis zu 180°, geschoben werden kann. Der vorderseitig angeordnete Lenkabschnitt wirkt dabei als Navigationselement, welches sich durch seine höhere Flexibilität bzw. Biegeweichheit leichter an Biegungen im Verlauf des Rohrs oder Kanals anpassen kann und somit für den restlichen Packerkörper die weitere Richtung vorgibt. Insbesondere wird durch Abstützung im Biegungsbereich und schrittweise auch in den Stabilitätsabschnitt weiterzugebende Biegung eine hinreichende Querkraftwirkung auch in dem Stabilitätsabschnitt erreicht, so dass auch dieser trotz seiner höhere Biegehärte (geringeren Biegeflexibilität) biegt und der Packer bzw. die Packeranordnung insgesamt dem Rohr- bzw. Kanalverlauf folgt. Gleichzeitig aber wird durch den Stabilisierungsabschnitt weiterhin eine hinreichende Gesamtstabilität des Packers, beispielsweise beim Einführen, bereitgestellt. Hierzu ist der Stabilisierungsabschnitt länger als der Lenkabschnitt.

Es ist hierbei ausreichend, nur einen kleinen Anteil der Stabilisierungsanordnung für den Lenkabschnitt vorzusehen, so dass beispielsweise vorgesehen sein kann, dass der Lenkabschnitt 1 bis 20 %, insbesondere 5 bis 10 %, der Gesamtlänge zwischen den Endstücken umfasst. Dabei hat sich gezeigt, dass der Packer weiterhin für den Transport bzw. das Einbringen zumindest im Wesentlichen eigenstabil bleiben kann. Durch die höhere Biegesteifheit im hinteren Stabilitätsabschnitt wird zudem ein "Einknicken" oder vergleichbares Stauchen des Packers verlässlich vermieden, was durch Stabilisierungselemente, die ein Längsstauchen vermeiden, noch verbessert werden kann. Auf diese Weise entsteht auch eine Art "Frontantriebseffekt", da der auf das hintere Endstück ausgeübte Vorschub den vorderen Bereich des Packers möglichst vollständig erreicht. Dieser Effekt wird verbessert, wenn Stabilisierungselemente des Lenkabschnitts auch wenigstens eine vorbestimmte Längssteifigkeit bereitstellen, die ein Stauchen auch im Lenkabschnitt verhindert.

Besonders vorteilhaft ist die Biegbarkeit des Packers im Lenkabschnitt und/oder im Stabilisierungsabschnitt zumindest teilweise elastisch, so dass bei einer Biegung eine Rückstellkraft zur Erstreckung des Packers in der Längsrichtung entsteht und somit eine zumindest im Wesentlichen gerade Grundstellung definiert ist.

Es kann gesagt werden, dass der Lenkabschnitt sozusagen ein zusätzliches, außen und vorne an das vordere Endstück anschließendes Navigationselement ersetzt. Durch die hier vorgeschlagene Integration der Navigationsmöglichkeit in den Packer selbst entsteht vorteilhaft ein kompakterer, robuster Aufbau. Ferner wird die Kurvengängigkeit verbessert, da durch die weiter außen liegende Abstützfläche eine verbesserte Lenkwirkung des biegehärteren Teils entsteht.

Vorzugsweise weist zumindest das vordere Endstück zumindest randseitig eine konkav gewölbte Führungsfläche auf. Auf diese Weise kann der Packerkopf dem Verlauf des Rohres bzw. Kanals verbessert folgen und die Einleitung einer Biegung im Lenkabschnitt ist verbessert möglich. Es wird eine Angriffsfläche zur Entstehung der durch Kontakt mit der Wand entstehenden Querkräfte geboten.

In einer besonders bevorzugten Weiterbildung der Erfindung kann der Packer ferner eine in das vordere Endstück integrierte Kameraanordnung mit einer auf das Vorfeld des Packers gerichteten Kamera umfassen, wobei wenigstens eine Kabelverbindung zu der Kameraanordnung von dem hinteren Endstück zu der Kameraanordnung durch die Stabilisierungsanordnung geführt ist.

Auf diese Weise wird eine weitere Hochintegration erreicht. Die Blickrichtung der Kamera wird klar definiert und die Kamera ist geschützt in das vordere Endstück eingebaut. Hierzu kann das vordere Endstück eine, beispielsweise zylindrische, Durchgangsöffnung aufweisen, in die die, insbesondere ebenso zylindrische, Kameraanordnung mit der Kamera eingeschoben und dort, insbesondere dichtend, befestigt werden kann. Die Befestigung kann durch Schrauben, Klebstoff, Verklemmen und/oder ähnliche Befestigungsmittel erfolgen. Die Kamera kann bevorzugt eine Weitwinkelkamera sein. Ferner kann die Kameraanordnung auch wenigstens eine Lichtquelle zur Ausleuchtung des Vorfelds des Packers umfassen.

Auf diese Weise werden der Sanierungspacker und die Kameraanordnung zu einer Einheit verschmolzen. Die Kameraanordnung und der Packerendverschluss, umfassend das vordere Endstück, sind so hochintegriert. Die Vorteile der Nutzung einer Kamera am Packer werden kombiniert mit einer einfachen, robusten Bauweise. Durch den Lenkabschnitt wird die Kamera ohne weitere nötige Bedienhandlungen immer in die Richtung entlang des Rohres oder Kanals ausgerichtet.

Mit besonderem Vorteil können die Kameraanordnung und wenigstens ein, insbesondere alle, Stabilisierungselemente des Lenkabschnitts eine gemeinsam verbaute Lenkbaueinheit bilden. Insbesondere können so bislang außen auf dem vorderen Endstück angebrachte Erweiterungsanordnungen, insbesondere umfassend bislang externe Navigationselemente und die Kameraanordnung, mit entsprechenden Modifikationen weiterverwendet werden, da sie die nötige Flexibilität ja bereits mitbringen. Statt eine Erweiterung des Packerkörpers zu bilden, erfolgt nun jedoch eine Integration in den Packer selber, indem der Stabilisierungsabschnitt verkürzt und mit den Stabilisierungselementen des Lenkabschnitts innerhalb der Hülle verbunden wird. An die Lenkbaueinheit kann nach hinten dann, insbesondere direkt, eine herkömmliche, den Stabilisierungsabschnitt bildende Stabilisierungsbaueinheit anschließen, die beispielsweise durch Verkleben und/oder Verschrauben und/oder durch Anschluss eines Zuleitungsabschnitts der Kabelverbindung zu der Kameraanordnung an die Lenkbaueinheit verbunden werden kann.

Zweckmäßigerweise kann die wenigstens eine Kabelverbindung durch die Stabilisierungsanordnung innerhalb eines Röhrenaals und/oder eines, insbesondere die Längsdehnung des Packers begrenzenden, Fiberglasstabes geführt sein. Dabei ist die Verwendung eines flexiblen Fiberglasstabes besonders bevorzugt, da dieser längs im Wesentlichen nicht gestaucht oder gedehnt werden kann und somit durch den Fiberglasstab der Abstand der beiden Endstücke bei Bewegung und/oder Befüllung mit dem Druckmittel zumindest im Wesentlichen konstant bleibt, was auch allgemein bevorzugt ist. Der Fiberglasstab, der sich zwischen den Endstücken oder zumindest zwischen dem hinteren Endstück und einem Anschluss der Lenkbaueinheit erstreckt, ist bevorzugt hinsichtlich Biegungen flexibler als der Lenkabschnitt an sich, definiert also dessen Biegesteifheit nicht. Auch andere Kabelverbindungen führende Stabilisierungselemente, beispielsweise ein anderer Röhrenaal, sind bevorzugt derart ausgebildet, dass sie als Teil einer die Längsdehnung des Packers begrenzenden Längsbegrenzungseinrichtung dienen.

In einer besonders bevorzugten Weiterbildung kann in diesem Zusammenhang ferner vorgesehen sein, dass wenigstens ein Stabilisierungselement des Lenkabschnitts eine Längsbegrenzungswirkung für den Lenkabschnitt aufweist. Beispielsweise kann das oder ein die höhere Flexibilität bereitstellendes Stabilisierungselement eine eng gewickelte Zugfeder sein, die hierdurch ein weiteres Stauchen verhindert und einem zu starken Dehnen eine hohe Kraft entgegensetzt, dennoch aber die notwendige reduzierte Biegesteifigkeit bereitstellt. Das oder ein die Längsbegrenzungswirkung bereitstellendes Stabilisierungselement des Lenkabschnitts kann aber auch ein, insbesondere die Feder umgebender, nicht stauchbarer, aber biegeflexibler Schlauch (Längsbegrenzungsschlauch) sein.

Ist die Kabelverbindung in einem Fiberglasstab (oder einem sonstigen die Kabelverbindungen im Stabilisierungsabschnitt führenden Stabilisierungselement) vorgesehen, der an einen Anschluss der Lenkbaueinheit angeschlossen ist, kann mit besonderem Vorteil vorgesehen sein, dass die Lenkbaueinheit ein, bevorzugt innerhalb der Zugfeder geführtes, Längsbegrenzungselement, beispielsweise ein Stahlseil, aufweist. Das Längsbegrenzungselement als Stabilisierungselement, das Längsbegrenzungswirkung für den Lenkabschnitt aufweist, kann dann eine Doppelfunktion aufweisen. Zum einen verhindert es eine Überdehnung der von dem Anschluss der Lenkbaueinheit zu der Kameraanordnung geführten Kabel, zum anderen begrenzt es vorteilhaft die Längsdehnung. Das Längsbegrenzungselement ist vorteilhaft mit dem die Kabelverbindungen im Stabilisierungsabschnitt führenden Stabilisierungselement, insbesondere dem Fiberglasstab, über den Anschluss verbunden, so dass das Längsbegrenzungselement und das die Kabelverbindungen im Stabilisierungsabschnitt führende Führungselement als weiteres Längsbegrenzungselement sich zu der Längsbegrenzungseinrichtung für den Packer insgesamt kombinieren. Dann ist vorteilhaft kein zusätzliches, weiteres Längsbegrenzungselement, beispielsweise eine sich zwischen den Endstücken über die gesamte Länge des Packers erstreckende Seele, nötig. Das Längsbegrenzungselement kann zum Schutz der Kabel von dem Anschluss zu der Kameraanordnung ohnehin bereits vorgesehen sein und wird einem weiteren Zweck zugeführt. In diesem Kontext ist der Anschluss der Lenkbaueinheit bevorzugt derart ausgebildet, dass das die Kabelverbindungen durch den Stabilisierungsabschnitt führende Stabilisierungselement sich durch Ziehen nicht löst, sondern beispielsweise verrastet oder anderweitig formschlüssig befestigt ist.

Allgemein kann also gesagt werden, dass der Lenkabschnitt als die Flexibilität bereitstellende Stabilisierungselemente eine Feder und/oder einen, insbesondere die Feder umschließenden, Schlauch aufweisen kann. Hierbei kann eine Zugfeder bereits ausreichend sein, insbesondere dann, wenn die Stabilisierungsanordnung nicht gegen den Rest des Inneren der Hülle abgedichtet ist, worauf im Folgenden noch näher eingegangen werden wird.

Vorzugsweise, auch unabhängig von dem Vorsehen des Lenkabschnitts vorteilhaft, kann die Stabilisierungsanordnung, insbesondere der Stabilisierungsabschnitt, ein Durchführelement, insbesondere einen Schlauch, umfassen. Das Durchführelement, beispielsweise als Schlauch ausgebildet oder einen solchen umfassend, stellt bei Vorsehen des Lenkabschnitts zweckmäßigerweise die hinreichende Steifheit bereit, um die erste Flexibilität zu definieren und dem Packer eine hinreichende mechanische Stabilität bereitzustellen. Hierbei ist eine Abdichtung nicht erforderlich, insbesondere, da durch das vordere Endstück nichts nach außen weitergeleitet werden muss, wie es beispielsweise bei einer vorlaufend angeordneten Kameraanordnung der Fall wäre. Insbesondere kann das Innere des Packers nach vorne durch das vordere Endstück, ggf. gemeinsam mit der darin integrierten Kameraanordnung, abgeschlossen sein.

In einer besonders bevorzugten Ausgestaltung kann an dem Durchführelement wenigstens eine UV-Lichtquelle einer Aushärtungseinrichtung angeordnet sein, die über eine Kabelverbindung innerhalb des Durchführelements betreibbar ist. Ist die Hülle des Packers transparent, können innerhalb des Packers Lichtquellen, insbesondere UV-LEDs, angebracht werden, die ein schnelles Aushärten durch UV-Strahlen ermöglichen. Der Außenschlauch ist selbstverständlich auch wenigstens für UV-Strahlung hinreichend transparent, um die gewünschte Aushärtungswirkung durch diese zu erzielen. Derartige UV-Lichtquellen und ggf. weitere zugehörige Mittel können zu einer weiteren Biegeversteifung und Längsversteifung des Stabilisierungsabschnitts führen. In gewissem Sinne kann bei Ausgestaltung mit einem Lenkabschnitt gesagt werden, dass dies durch den biegsameren Lenkabschnitt wenigstens teilweise ausgeglichen wird.

Wird sowohl eine Tauglichkeit als Bogenpacker erreicht, beispielsweise durch den Lenkabschnitt, und werden UV-Lichtquellen vorgesehen, ergibt sich eine besonders vielseitige Ausgestaltung, da das Packersystem dann nicht nur in verschiedenen Größenklassen zu sanierender Rohr- bzw. Kanalabschnitte eingesetzt werden kann, sondern auch als Bogenpacker dient und wahlweise mit oder ohne UV-Aushärtung betrieben werden kann.

Das hintere Endstück kann einen Druckmittelanschluss für das Druckmittel aufweisen, wie dies grundsätzlich bekannt ist. Allerdings ist es, da, wie bereits erläutert wurde, eine Abdichtung des Inneren der Stabilisierungsanordnung, beispielsweise eines Durchführelements, bei der erfindungsgemäßen Ausgestaltung nicht notwendig ist, besonders vorteilhaft, wenn der Druckmittelanschluss in das Innere des Stabilisierungsabschnitts mündet, welcher nicht dichtend gegenüber dem restlichen Inneren der Hülle ausgebildet ist. Das Druckmittel, beispielsweise Wasser oder ein Gas, strömt also zunächst, insbesondere zentral, in die Stabilisierungsanordnung ein, beispielsweise das Durchführelement. Von dort kann es nach außen gelangen und die Hülle befüllen und dehnen. Somit können außen liegende Anschlüsse vermieden werden.

Besonders vorteilhaft ist es, wenn das hintere Endstück eine insbesondere zentrale Anschlusseinrichtung mit dem Druckmittelanschluss und Anschlüssen für die wenigstens eine Kabelverbindung für die Kamera und/oder die wenigstens eine UV-Lichtquelle aufweist. Auf diese Weise ist es also möglich, alle notwendigen Anschlüsse über eine zentrale Anschlusseinrichtung zusammengehörig als einen gemeinsamen Anschluss an dem hinteren Endstück bereitzustellen. Eigene Teilanschlüsse für UV-Licht, die Kameraanordnung und insbesondere Druckmittel entfallen. Das Druckmittel kann insbesondere um die angeschlossenen Leitungen zu dem UV-Licht und der Kameraanordnung herum in die Stabilisierungsanordnung einströmen, insbesondere in das Durchführelement. Nachdem deren Inneres gegenüber dem restlichen Inneren der Hülle nicht abgedichtet ist, kann es von dort aus die Hülle aufblähen. Der Gesamtaufbau und die Herstellung der notwendigen Verbindungen wird vereinfacht und die Robustheit des Packers wird erhöht.

Neben dem Packersystem betrifft die vorliegende Erfindung auch einen Außenschlauch für einen Packer für die Rohr- und Kanalsanierung, insbesondere eines erfindungsgemäßen Packersystems, wobei der Packer ein vorderes und ein hinteres Endstück, zwischen denen eine mit einem Druckmittel befüllbare, dehnbare Hülle und eine innerhalb der Hülle zwischen dem vorderen und dem hinteren Endstück, insbesondere zentral, verlaufende Stabilisierungsanordnung angeordnet sind, aufweist,
wobei der Außenschlauch aus einem flexiblen Gewebematerial, das eine gegenüber der Hülle geringe oder eine verschwindende Dehnbarkeit aufweist, besteht und einen inneren, die Länge zwischen den Endstücken zumindest im Wesentlichen überdeckenden Zentralabschnitt mit einem ersten Innendurchmesser und zu beiden Seiten des Zentralabschnitts jeweilige Endabschnitte eines zweiten Innendurchmessers, der kleiner als der erste Innendurchmesser ist und zumindest im Wesentlichen dem Außendurchmesser der Endstücke entspricht, aufweist, so dass der Außenschlauch derart über den Packer überziehbar ist, dass die Endabschnitte an den Endstücken anliegen und der Zentralabschnitt die Ausdehnung der Hülle bei Druckbeaufschlagung, insbesondere auf den ersten Innendurchmesser, begrenzt. Sämtliche Ausführungen bezüglich des erfindungsgemäßen Packersystems lassen sich analog auf den Außenschlauch übertragen und umgekehrt, sodass auch mit dem Außenschlauch die bereits genannten Vorteile erhalten werden können. Insbesondere kann durch den Außenschlauch ein Packer mit äußerst dehnbarer, weicher Hülle auch für größere Durchmesser der zu sanierenden Rohr- und/oder Kanalabschnitte konfektioniert werden.

Ein erfindungsgemäßes Verfahren zur Rohr- und Kanalsanierung mit einem erfindungsgemäßen Packersystem sieht vor, dass abhängig von einer Zuordnung des wenigstens einen Außenschlauchs zu einem Durchmesser und/oder Durchmesserbereich zu sanierender Rohr- und/oder Kanalabschnitte dann, wenn die Zuordnung eines des wenigstens einen Außenschlauchs einem Durchmesser eines aktuell zu sanierenden Rohr- und/oder Kanalabschnitts entspricht, dieser Außenschlauch auf den Packer übergezogen wird und die hierdurch entstehende Packeranordnung zur Sanierung verwendet wird. Hierbei kann in besonders bevorzugter Weiterbildung, wie diskutiert, vorgesehen sein, dass dann, wenn der Durchmesser des aktuell zu sanierenden Rohr- und/oder Kanalabschnitts keiner Zuordnung entspricht und/oder wenn eine Sanierung in einem Bogen des Rohr- und/oder Kanalabschnitts, insbesondere mit einem einen Schwellwert unterschreitenden Durchmesser, erfolgen soll, allein der Packer ohne Außenschlauch zur Sanierung verwendet wird. Dies gilt, wie diskutiert, insbesondere für kleine Durchmesser eines Anwendungs-Durchmesserbereichs. Wie dargelegt, erlaubt es die weiche, besonders dehnbare Ausgestaltung der Hülle ferner, dass bei der Sanierung die Hülle mit einer Druckerhöhung von maximal 1 bar, insbesondere maximal 0,5 bar, beaufschlagt wird, also maximal 1 bar ATÜ bzw. 0,5 bar ATÜ.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Packersystem,
- Fig. 2: eine prinzipielle gesamte Querschnittsansicht von Details eines ersten Ausführungsbeispiels eines Sanierungspackers des Packersystems,
- Fig. 3: eine teilweise Detailansicht des vorderen Bereichs des Packers,
- Fig. 4: eine teilweise Detailansicht des hinteren Bereichs des Packers,
- Fig. 5: schematisch eine mögliche Ausgestaltung von Verstärkungselementen bei einem zweiten Ausführungsbeispiel eines Sanierungspackers des Packersystems,
- Fig. 6: einen Querschnitt durch einen ersten Außenschlauch,
- Fig. 7: einen Querschnitt durch einen zweiten Außenschlauch, und
- Fig. 8: schematisch eine in dem Packersystem gebildete Packeranordnung.

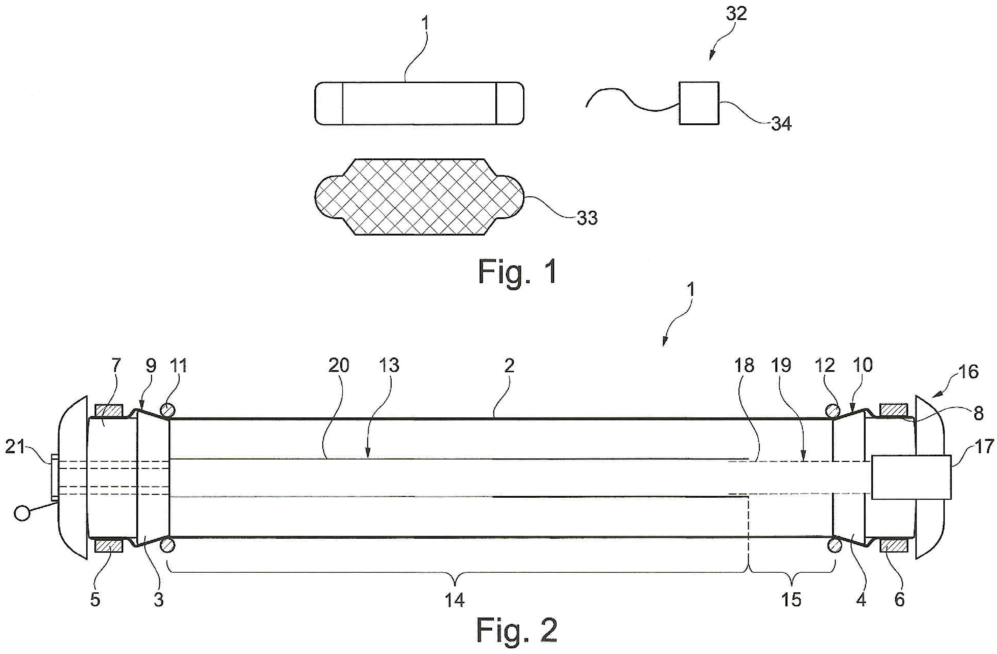

Fig. 1 zeigt in einer Prinzipskizze schematisch Komponenten eines erfindungsgemäßen Packersystems 32 zur Rohr- und/oder Kanalsanierung. Das Packersystem 32 umfasst einen Packer 1, wenigstens einen Außenschlauch 33 und optional eine Druckbeaufschlagungseinrichtung 34. Durch Aufziehen des Außenschlauches 33 auf den Packer 1 kann eine Packeranordnung geschaffen werden, die für bestimmte Durchmesser zu sanierender Rohr- und/oder Kanalabschnitte geeignet ist. Der Packer 1 kann jedoch auch alleine verwendet werden.

Dabei wird zunächst mithilfe der Figuren 2 bis 5 der Packer 1 genauer beschrieben.

Fig. 2 zeigt den Sanierungspacker 1 des Packersystems 1 in einem ersten Ausführungsbeispiel genauer. Der Packer 1 umfasst eine dehnbare Hülle 2 als Blähschlauch. Die Hülle 2 ist schlauchförmig ausgebildet ist und besteht aus einem dehnbaren, gewebelosen, transparenten Hüllenmaterial. Hierdurch lässt sich die Hülle prinzipiell vorliegend auf das Vier- bis Fünffache des Durchmessers der Endstücke 3, 4 (Flansche) zerstörungsfrei ausdehnen bzw. wenigstens auf das Sechzehnfache bis Fünfundzwanzigfache des zwischen den Endstücken 3, 4 eingeschlossenen Volumens. Damit können zumindest zu sanierende Rohr- und/oder Kanalabschnitte in einem Anwendungs-Durchmesserbereich von 70 bis 200 mm (DN 70 bis DN 200) durch die ausgedehnte Hülle 2 ausgefüllt werden. Durch die weiche, dünne und extrem dehnbare Ausgestaltung der Hülle 2 ist es für alle diese Anwendungsfälle ausreichend, wenn die Druckbeaufschlagungseinrichtung 34 eine Druckerhöhung von maximal 1 bar, insbesondere sogar max. 0, 5 bar, bereitstellt.

Die Hülle 2 wird auf beiden Seiten durch die Endstücke 3, 4 geschlossen und ist mittels Spannringen 5, 6 fest und luftdicht mit den Endstücken 3, 4 verbunden. Die Endstücke 3, 4 weisen jeweils eine umlaufende Nut 7, 8, um ein Abrutschen der Hülle 2 zu vermeiden, und ferner an ihrer Innenseite einen konischen Abschnitt 9, 10 auf, an dem die Hülle 2 anliegt. Außenseitig ist an dieser Stelle jeweils ein Haltering bzw. eine Schelle 11, 12 angebracht. Dabei bezeichnet der äußere Durchmesser der Endstücke 3, 4 in dieser Beschreibung generell dessen größte Ausdehnung.

Das Hüllenmaterial ist vorliegend ein Elastomer, insbesondere ein PU-Elastomer oder Silikon. Die Dicke 2 der Hülle bzw. der hier diese bildenden Hüllenschicht beträgt vorliegend 0,3 bis 0,4 mm, wobei auch andere Dicken zwischen 0,1 und 1 mm möglich sind.

Neben der Hülle 2 erstreckt sich zwischen den Endstücken 3, 4 eine in Fig. 1 nur schematisch angedeutete Stabilisierungsanordnung 13, die einen Stabilisierungsabschnitt 14 und einen Lenkabschnitt 15 umfasst. Der Lenkabschnitt 15 ist kürzer als der Stabilisierungsabschnitt ausgebildet und weist zudem eine höhere Flexibilität, insbesondere also eine geringere Biegesteifigkeit und/oder ein höheres E-Modul, als der Stabilisierungsabschnitt auf. Das vordere Endstück 4 läuft vorne in einem Bereich zur Bildung einer konkaven Führungsfläche 16 zu. Hierdurch kann beim Navigieren durch ein Rohr oder Kanal leicht durch den Packerkopf, auch in Kurven, dem Verlauf gefolgt werden, wobei die Querkräfte ausreichen, im Lenkabschnitt 15 eine geeignete Biegung hervorzurufen, die sich bei weiterem Vorschub auch auf den biegehärteren Stabilisierungsabschnitt 14 fortsetzt.

In das vordere Endstück 4 ist eine Kameraanordnung 17 mit einer Kamera integriert, auf das Vorfeld des Packers 1 gerichtet ist und als Weitwinkelkamera ausgeführt ist. Die Kameraanordnung ist in einer Durchgangsöffnung des vorderen Endstücks 4 befestigt. Sie bildet mit Stabilisierungselementen 18 des Lenkabschnitts 15 eine Lenkbaueinheit 19, die mit dem Stabilisierungsabschnitt 14, konkret einem Durchführelement 20 als Stabilisierungselement des Stabilisierungsabschnitts 14 verbunden ist.

Am hinteren Endstück 3 ist eine zentrale Anschlusseinrichtung 21 vorgesehen. Diese fasst vorliegend die Anschlüsse für das Druckmittel, die Kameraanordnung und außen auf dem Durchführelement vorgesehene UV-Lichtquellen zusammen. Das Druckmittel kann hierbei die Kabelverbindungen für die UV-Lichtquellen und die Kamera umströmen und durch das nicht dichtende Durchführelement für diese Kabelverbindungen das Innere der Hülle 2 ausfüllen, um diese aufzublähen und um ein Laminat oder einen Liner an eine zu sanierende Wand anzupressen. Mittels der UV-Lichtquellen kann das Laminat oder der Liner durch die transparente Hülle 2 und ggf., wie noch erläutert werden wird, durch den ebenso zumindest UV-transparenten Außenschlauch 33, ausgehärtet werden.

Fig. 2 zeigt hierzu den vorderen Bereich des Packers 1 genauer, wobei allerdings zur besseren Darstellung die Hülle 2 nicht gezeigt und das vordere Endstück 4 abstrahiert ist.

An die Kameraanordnung 17 mit der Kamera 22 schließen in der Lenkbaueinheit 19 im Ausführungsbeispiel zwei Stabilisierungselemente 18 des Lenkabschnitts 15 an, nämlich eine Zugfeder 23 und ein optionaler Schlauch 24. Die Zugfeder 23 stellt die zweite, höhere Biegeflexibilität des Lenkabschnitts 15 bereit. Sie ist bevorzugt eng gewickelt, um auch eine Längsstauchungsbbegrenzung bereitzustellen, insbesondere Stauchungen zu vermeiden. Stauchungsbegrenzend kann zusätzlich oder alternativ auch der Schlauch 24 wirken. Der Schlauch 24 dient vorliegend auch zur Verbindung mit dem Durchführelement 20, das ebenso als Schlauch ausgebildet ist. Außen auf dem Durchführelement 20 sind die UV-Lichtquellen 28 angeordnet. Die Kabelverbindung 25 zur Kameraanordnung 17, umfassend beispielsweise eine Energieversorgungsleitung für die Kamera 22 und zusätzlich von der Kameraanordnung 17 umfasste Lichtquellen 26 zur Ausleuchtung des Vorfelds für die Kamera 22 sowie Datenleitungen, sind in einem Fiberglasstab 27 durch das Durchführelement 20 geführt.

Der Fiberglasstab 27, der biegeflexibel ist, aber nicht stauchbar, dient auch als Längenbegrenzungselement. Er erstreckt sich zwischen einem Anschluss der Lenkbaueinheit 19, der innerhalb der Zugfeder 23 liegen kann, und den hinteren Endstück 3. Alternativ oder zusätzlich kann auch das Durchführelement 20 als Längsbegrenzungsschlauch längsbegrenzend wirken. Die Längsbegrenzungseinrichtung wird vorliegend vervollständig durch ein Längsbegrenzungselement 31 der Lenkbaueinheit 19, das sich - wie die Kabel von dem Anschluss zu der Kameraanordnung 17 - innerhalb der Zugfeder 23 von dem Anschluss zu der Kameraanordnung 17 erstreckt und vorliegend als ein Stahlseil ausgebildet ist, das kürzer als die Kabel ist. Es verhindert daher eine Überdehnung der Kabel und wirkt gleichzeitig gemeinsam mit dem Fiberglasstab 27 für den gesamten Packer 1 längsdehnungsbegrenzend.

Durch die Integration der Kameraanordnung 17 in das vordere Endstück 4 sind der Sanierungspacker 1 und die Kamera 22 zu einer Einheit verschmolzen. Der Lenkabschnitt 15 erlaubt eine komfortable und hinreichend leichtgängige Navigation und sorgt immer für eine korrekte Ausrichtung der Kamera 22. Dadurch, dass der Packer 1 trotz der zwei Abschnitte 14, 15 nicht stauchbar ist, tritt entsprechend an einem Rohrbogen keine Stauchung auf und es entsteht ein "Frontantriebseffekt", der das Durchschieben des mit Laminat bestückten Packers 1 weiter deutlich vereinfacht. Auch die nur dünne, weiche Hülle 2 mit der geringen, wenig versteifenden Hüllenmaterialmenge trägt zur einfachen Navigierbarkeit des Packers 1 bei.

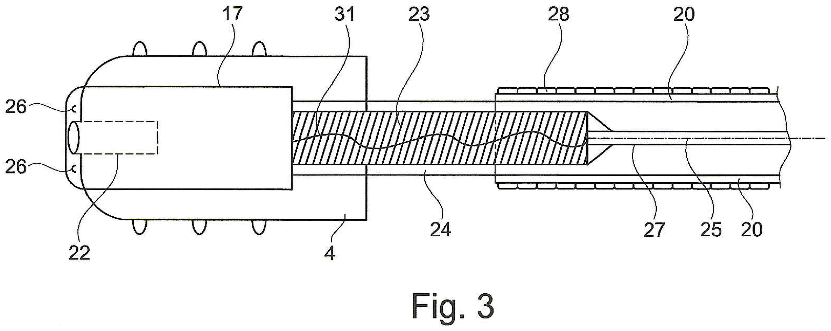

Die Kabelverbindung 25 ist durch das Durchführelement 20 bis zur Anschlusseinrichtung 21 am hinteren Endstück 3 geführt, wie durch Fig. 3 gezeigt. Dort ist auch gezeigt, wie ein gemeinsamer Anschluss für die Kabelverbindung 25, die Kabelverbindung 29 zu den UV-Lichtquellen 28 und das Druckmittel (siehe Leitung 30 mit Öffnung in das Durchführelement 20) geschaffen ist. Durch eine einzige Steckverbindung ist ein Anschluss des Packers 1 möglich. In alternativen Ausführungsbeispielen können auch mehrere Steckverbindungen, beispielsweise getrennt für Elektrik und Druckmittel, vorgesehen werden.

Es sei noch angemerkt, dass, insbesondere zu Befestigungszwecken, die Stabilisierungsanordnung 13 bzw. deren Stabilisierungselemente 18, 20 auch in andere Abschnitte 14, 15 bzw. die Flansche 3, 4 einragen können.

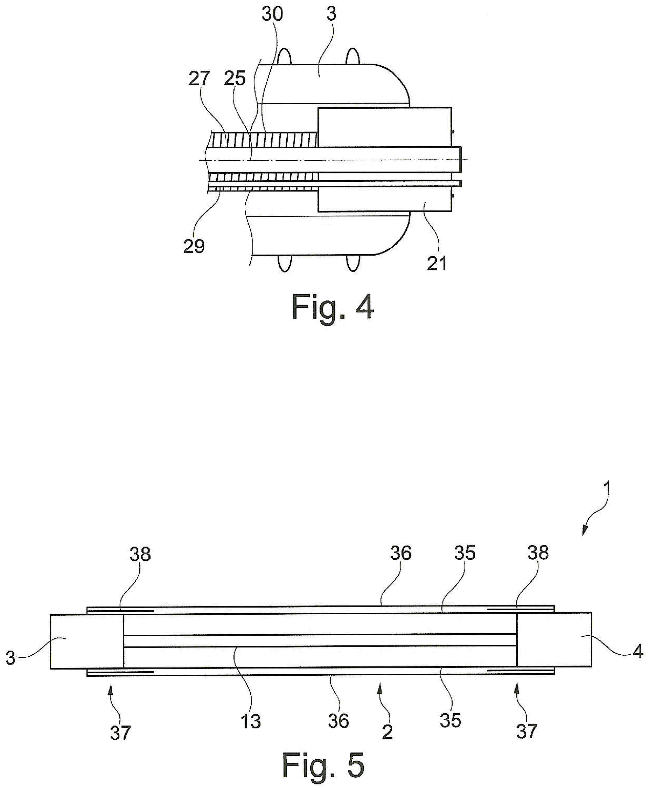

Fig. 5 zeigt abstrahiert eine Möglichkeit zur Modifikation des Packers 1 zu einem zweiten Ausführungsbeispiel. Dort ist die Hülle 2 mehrschichtig angelegt, sodass eine innere, beispielsweise als Innenfolie bereitgestellte Hüllenschicht 35 und eine äußere, beispielsweise als Außenfolie bereitgestellte Hüllenschicht 36 vorgesehen sind, die miteinander verbunden sein können. Zwischen der Hüllenschicht 35 und der Hüllenschicht 36 ist in Randbereichen 37 jeweils ein Verstärkungselement 38 vorgesehen, insbesondere mit diesen verbunden. Die Verstärkungselemente 38 können beispielsweise durch eine Sicherheitsfolie gegeben sein. Die Verstärkungselemente 38 decken nicht die gesamte Hülle 2 ab, sondern lassen einen Zentralbereich frei, dass sie lediglich am besonders beanspruchten Rand unterstützen sollen. Die Verstärkungselemente 38 bestehen ebenso aus dem Füllmaterial und weisen dieselbe Dicke wie die innere Hüllenschicht 35 und die äußere Hüllenschicht 36 auf.

Es sind auch Ausführungsformen denkbar, in denen nur eine Hüllenschicht 35, 36, beispielsweise die Hüllenschicht 36, mit den Verstärkungselementen 38 kombiniert wird.

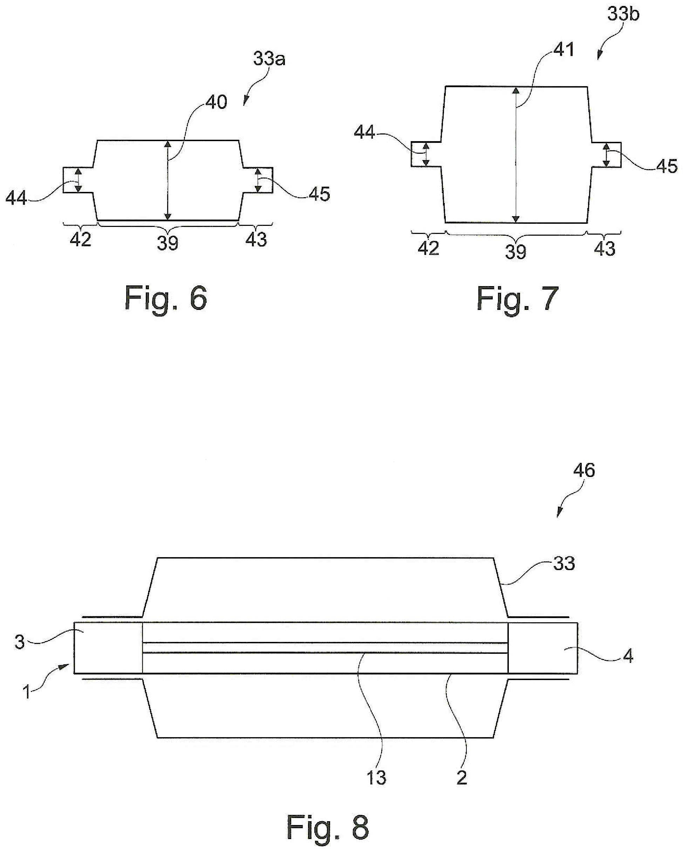

Fig. 6 und Fig. 7 zeigen nun zwei Außenschläuche 33a, 33b, in direktem Vergleich in Querschnittsansichten ihrer Bezugsform genauer. Da die Außenschläuche 33 aus einem flexiblen Gewebematerial mit sehr geringer Materialdicke, beispielsweise 0,05 bis 0,2 mm, bestehen, wird die Bezugsform maximalen Innenvolumens bei maximal möglicher Ausdehnung der in ihnen aufgenommenen Hülle 2 erreicht. Das Gewebematerial kann beispielsweise ein Nylongewebe sein und ist zumindest im Wesentlichen nicht dehnbar, was die Bezugsform definiert.

Beide Außenschläuche 33a, 33b umfassen einen inneren, die Länge zwischen den Endstücken 3, 4 zumindest im Wesentlichen überdeckenden Zentralabschnitt 39 mit jeweils einem ersten Innendurchmesser 40, 41 und jeweilige Endabschnitte 42, 43 zu beiden Seiten des Zentralabschnitts 39. Die Endabschnitte 42, 43 weisen zweite Innendurchmesser 44, 45 auf, die für beide Außenschläuche 33a. 33b gleich sind. Sie sind entsprechend der Außendurchmesser der jeweiligen Endstücke 3, 4 gewählt, insbesondere zumindest im Wesentlichen gleich wie diese, insbesondere etwas größer, so dass ein jeweiliger Außenschlauch 33a, 33b über die Packer 1 derart gezogen werden kann, dass die Endabschnitte 42, 43 an jeweiligen Endstücken 3, 4 zu liegen kommen. Vorliegend sind die zweiten Innendurchmesser 44, 45 auf beiden Seiten gleich, so dass es auch nicht wesentlich ist, welcher Endabschnitt 42, 43 welchem Endstück 3, 4 zugeordnet wird, was die Anbringung vereinfacht. Optional sind Befestigungsmittel denkbar, um den Außenschlauch an den Endstücken 3, 4 zu fixieren, welche bei entsprechender Passgenauigkeit jedoch nicht nötig sind.

Die Innendurchmesser 40, 41 sind ersichtlich unterschiedlich. Sie definieren, welchen Durchmessern bzw. Durchmesserbereich der zu sanierenden Rohr- und/oder Kanalabschnitte der Außenschlauch 33a. 33b zuzuordnen ist. Beispielsweise kann der Innendurchmesser 40 etwas größer, beispielsweise max. 10 % größer, als 150 mm gewählt werden, sodass der Außenschlauch 33a beispielsweise für DN 125 und DN 150 geeignet sein kann. Der Innendurchmesser 50 kann etwas größer, beispielsweise max. 10 % größer, als 200 mm gewählt werden, sodass der Außenschlauch 33b beispielsweise für DN 175 und DN 200 geeignet sein kann.

Fig. 8 zeigt beispielhaft und abstrahiert, wie eine Packeranordnung 46 nach Aufziehen eines Außenschlauchs 33 auf den Sanierungspacker 1 gebildet ist. Der in Bezugsform gezeigte Außenschlauch 33 begrenzt die Ausdehnung der Hülle 2, wenn diese mit dem Druckmittel beaufschlagt und somit ausgedehnt wird. Damit wird ein zeitliches Ausdehnen vermieden und eine Sollform herbeigeführt, die ein im Zentralabschnitt 39 aufgebrachtes Laminat bzw. einen dort angeordneten Liner gegen die Rohrwandung des zu sanierenden Rohr- und/oder Kanalabschnitts presst. Nachdem der erste Innendurchmesser 40, 41 zumindest etwas größer als der Durchmesser des zu sanierenden Rohr- und/oder Kanalabschnitts ist, steht in jedem Fall noch genügend Anpressdruck zur Verfügung.

Im vorliegenden Ausführungsbeispiel kann der Packer 1 zumindest für zu sanierenden Rohr- und/oder Kanalabschnitte, deren Durchmesser die Ausdehnung des Packers 1 nicht zu sehr übersteigt, auch ohne Außenschlauch 33 verwendet werden. Beispielsweise kann bei einem Durchmesser von 50 bis 60 mm des Packers 1 ein DN 70-Rohr auch ohne Außenschlauch 33 saniert werden. Der Packer 1 kann zudem auch bei der Sanierung in Bögen, zumindest bis zu einem gewissen Schwellwert für den Durchmesser des zu sanierenden Rohr- und/oder Kanalabschnitts, vorliegend bis DN 150, ohne Außenschlauch 33 eingesetzt werden, da hier durch die spezielle Geometrie der Ausdehnungsraum vornehmlich im Bogen selbst entsteht.

Entsprechend können in dem Packersystem 32 durch Verwendung des Packers 1 alleine und Packeranordnungen 46 mit einem Außenschlauch 33, 33a, 33b, der insbesondere aus mehreren Außenschläuchen 33, 33a, 33b gewählt werden kann, große Anwendungs-Durchmesserbereiche, beispielsweise DIN 70 bis DIN 200, abgedeckt werden und zugleich Sanierungen in Bögen erfolgen. Darüber hinaus kann eine Sanierung mit oder ohne Einsatz der UV-Lichtquellen 28 erfolgen. Die Außenschläuche 33 können, beispielsweise bei Verschmutzung oder Beschädigung, problemlos ausgetauscht werden.

## Patentansprüche

1. Packersystem (32) für die Rohr- und Kanalsanierung, umfassend einen Packer (1), der ein vorderes und ein hinteres Endstück (3, 4), zwischen denen eine mit einem Druckmittel befüllbare, dehnbare Hülle (2) und eine innerhalb der Hülle (2) zwischen dem vorderen und dem hinteren Endstück (3, 4) verlaufende Stabilisierungsanordnung (13) angeordnet sind, aufweist, **dadurch gekennzeichnet, dass** die Hülle (2) aus einem gewebelosen, insbesondere weichen, Hüllenmaterial besteht und das Packersystem 32) ferner wenigstens einen Außenschlauch (33, 33a, 33b) aus einem flexiblen Gewebematerial, das eine gegenüber der Hülle (2) geringe oder eine verschwindende Dehnbarkeit aufweist, umfasst, wobei der Außenschlauch (33, 33a, 33b) einen inneren, die Länge zwischen den Endstücken (3, 4) zumindest im Wesentlichen überdeckenden Zentralabschnitt (39) mit einem ersten Innendurchmesser (40, 41) und zu beiden Seiten des Zentralabschnitts (39) jeweilige Endabschnitte (42, 43) eines zweiten Innendurchmessers (44, 45), der kleiner als der erste Innendurchmesser (40, 41) ist und zumindest im Wesentlichen dem Außendurchmesser der Endstücke (3, 4) entspricht, aufweist, so dass der Außenschlauch (33, 33a, 33b) derart über den Packer (1) überziehbar ist, dass die Endabschnitte (42, 43) an den Endstücken (3, 4) anliegen und der Zentralabschnitt (39) die Ausdehnung der Hülle (2) bei Druckbeaufschlagung, insbesondere auf den ersten Innendurchmesser (40, 41), begrenzt.

2. Packersystem nach Anspruch 1, **dadurch gekennzeichnet, dass** es mehrere Außenschlaüche (33, 33a, 33b) unterschiedlicher erster Innendurchmesser (40, 41) aufweist, die unterschiedlichen Durchmessern und/oder Durchmesserbereichen zu sanierender Rohr- und/oder Kanalabschnitte zugeordnet sind.

3. Packersystem nach Anspruch 1 oder 2, **dadurch gekennzeichnet, dass** das Packersystem (32) ferner eine Druckbeaufschlagungseinrichtung (34) zum Befüllen der Hülle (2) mit dem Druckmittel aufweist, die zur Beschränkung einer Druckerhöhung in der Hülle (2) auf einen Maximalwert von höchstens 1 bar, insbesondere höchstens 0,5 bar, ausgebildet ist.

4. Packersystem nach einem der vorangehenden Ansprüche, **dadurch gekennzeichnet, dass** die Hülle (2) eine Materialdicke in einem Bereich von 0,1 bis 1 mm, insbesondere 0,3 bis 0,6 mm, aufweist und/oder das Hüllenmaterial ein Polyurethan-Elastomer und/oder Silikon ist.

5. Packersystem nach einem der vorangehenden Ansprüche, **dadurch gekennzeichnet, dass** der Packer (1) ferner in an die Endstücke (3, 4) anschließenden Randbereichen (37), einen Zentralbereich des Packers (1) freilassend, die Hülle (2) lokal verstärkende, zylinderförmige Verstärkungselemente (38) aus dem Hüllenmaterial aufweist.

6. Packersystem nach einem der vorangehenden Ansprüche, **dadurch gekennzeichnet, dass** das Gewebematerial ein Kunstfasergewebe, insbesondere ein Nylongewebe, und/oder ein faserverstärktes Gewebe ist und/oder eine Dicke in einem Bereich von 0,05 bis 0,5 mm, bevorzugt 0,05 bis 0,2 mm, aufweist.

7. Packersystem nach einem der vorangehenden Ansprüche, **dadurch gekennzeichnet, dass** die Stabilisierungsanordnung (13) aufweist:
- einen eine erste Flexibilität aufweisenden und den größeren Teil der Gesamtlänge zwischen den Endstücken (3, 4) abdeckenden Stabilisierungsabschnitt (14), der sich unmittelbar an das hintere Endstück (3) anschließt, und
- einen Lenkabschnitt (15), der sich von dem Stabilisierungsabschnitt (14) zu dem vorderen Endstück (4) erstreckt, wobei der Lenkabschnitt (15) eine zweite, höhere Flexibilität als der Stabilisierungsabschnitt (14) aufweist.

8. Packersystem nach Anspruch 7, **dadurch gekennzeichnet, dass** der Packer (1) ferner eine in das vordere Endstück (4) integrierte Kameraanordnung (17) mit einer auf das Vorfeld des Packers (1) gerichteten Kamera (22) umfasst, wobei wenigstens eine Kabelverbindung (25) zu der Kameraanordnung (17) von dem hinteren Endstück (3) zu der Kameraanordnung (17) durch die Stabilisierungsanordnung (13) geführt ist.

9. Packersystem nach Anspruch 8, **dadurch gekennzeichnet, dass** die Kameraanordnung (17) und wenigstens ein, insbesondere alle, Stabilisierungselemente (18) des Lenkabschnitts (15) eine gemeinsam verbaute Lenkbaueinheit (19) bilden.

10. Packersystem nach einem der vorangehenden Ansprüche, **dadurch gekennzeichnet, dass** die Hülle (2) transparent ausgestaltet ist und die Stabilisierungsanordnung (13), insbesondere der Stabilisierungsabschnitt (14), ein Durchführelement (20) umfasst, wobei an dem Durchführelement (20) eine UV-Lichtquelle (28) einer Aushärtungseinrichtung angeordnet ist, die über eine Kabelverbindung (29) innerhalb des Durchführelements (20) betreibbar ist.

11. Packersystem nach einem der vorangehenden Ansprüche, **dadurch gekennzeichnet, dass** das hintere Endstück (3) einen Druckmittelanschluss für das Druckmittel aufweist.

12. Außenschlauch (33, 33a, 33b) für einen Packer (1) für die Rohr- und Kanalsanierung, insbesondere eines Packersystems (32) nach einem der vorangehenden Ansprüche, wobei der Packer (1) ein vorderes und ein hinteres Endstück (3, 4), zwischen denen eine mit einem Druckmittel befüllbare, dehnbare Hülle (2) und eine innerhalb der Hülle (2) zwischen dem vorderen und dem hinteren Endstück (3, 4) verlaufende Stabilisierungsanordnung (13) angeordnet sind, aufweist,
wobei der Außenschlauch (33, 33a, 33b) aus einem flexiblen Gewebematerial, das eine gegenüber der Hülle (2) geringe oder eine verschwindende Dehnbarkeit aufweist, besteht und einen inneren, die Länge zwischen den Endstücken (3, 4) zumindest im Wesentlichen überdeckenden Zentralabschnitt (39) mit einem ersten Innendurchmesser (40, 41) und zu beiden Seiten des Zentralabschnitts (39) jeweilige Endabschnitte (42, 43) eines zweiten Innendurchmessers (44, 45), der kleiner als der erste Innendurchmesser (40, 41) ist und zumindest im Wesentlichen dem Außendurchmesser der Endstücke (3, 4) entspricht, aufweist, so dass der Außenschlauch (33, 33a, 33b) derart über den Packer (1) überziehbar ist, dass die Endabschnitte (42, 43) an den Endstücken (3, 4) anliegen und der Zentralabschnitt (39) die Ausdehnung der Hülle (2) bei Druckbeaufschlagung, insbesondere auf den ersten Innendurchmesser (40, 41), begrenzt.

13. Verfahren zur Rohr- und Kanalsanierung mit einem Packersystem (32) nach einem der Ansprüche 1 bis 11, wobei abhängig von einer Zuordnung des wenigstens einen Außenschlauchs (33, 33a, 33b) zu einem Durchmesser und/oder Durchmesserbereich zu sanierender Rohr- und/oder Kanalabschnitte dann, wenn die Zuordnung eines des wenigstens einen Außenschlauchs (33, 33a, 33b) einem Durchmesser eines aktuell zu sanierenden Rohr- und/oder Kanalabschnitts entspricht, dieser Außenschlauch (33, 33a, 33b) auf den Packer (1) übergezogen wird und die hierdurch entstehende Packeranordnung (46) zur Sanierung verwendet wird.

14. Verfahren nach Anspruch 13, **dadurch gekennzeichnet, dass** dann, wenn der Durchmesser des aktuell zu sanierenden Rohr- und/oder Kanalabschnitts keiner Zuordnung entspricht und/oder wenn eine Sanierung in einem Bogen des Rohr- und/oder Kanalabschnitts, insbesondere eines einen Schwellwert unterschreitenden Durchmessers, erfolgen soll, allein der Packer (1) ohne Außenschlauch (33, 33a, 33b) zur Sanierung verwendet wird.

15. Verfahren nach Anspruch 13 oder 14, **dadurch gekennzeichnet, dass** bei der Sanierung die Hülle (2) mit einer Druckerhöhung von maximal 1 bar, insbesondere maximal 0,5 bar, beaufschlagt wird.
